# EUROPEAN PATENT APPLICATION

(11) **EP 0 641 641 A1**
(43) Date of publication of application: **08.03.1995**
(21) Application number: 93202618.0
(22) Date of filing: 07.09.1993
(51) Int. Cl.: B29C 53/34, B29C 67/00

(54) **Method for deforming an edge of a sandwich material**

(71) Applicant: AIREX SA, CH-5643 Sins (CH)
(72) Inventor: Brambach,Johan Arie, 2451 ZS Leimuiden (NL); van Egmond,Arie, 2252 VA Voorschoten (NL)
(74) Representative: Smulders, Theodorus A.H.J., Ir.

(57) **Abstract**

The invention relates to a method for deforming an edge, or a part of an edge, of a sandwich material which is made up of at least one core which is deformable under the influence of heat and one or two top layers which are deformable under the influence of heat and/or pressure, wherein an edge of the sandwich material is introduced into a mold at a temperature at which the materials of the core and the top layer(s) are thermoplastically deformable, and the sandwich material is deformed by moving the sandwich material relative to the mold, the shape of the edge being consolidated by cooling during or after the deformation.

## Description

This invention relates to a method for deforming an edge of a sandwich material which is made up of at least one core which is deformable under the influence of heat and one or two top layers which are deformable under the influence of heat and/or pressure, more specifically to the provision of an edge finish on at least a part of an edge of such a material.

Sheet-like materials, such as sandwich constructions, are often applied in those areas where materials are used which must combine high strength or stiffness with a light weight. This is the case, for example, in aircraft, aerospace and transport applications.

Sandwich constructions generally consist of a core material which is light in weight, with a top layer, often reinforced, on both surfaces thereof. Owing to the good bonding between the top layers and the core material, the proper stiffness is obtained. The other properties of the sandwich material are partly determined by the nature of the various starting materials used.

Known sandwich constructions are based on a core material with a honeycomb structure. Another known type of sandwich material is described in European patent applications 264 495, 268 148 and 313,171, the contents of which are incorporated herein by reference. This material is entirely thermoplastic and consists of a core material comprising *inter alia* a thermoplastic foam and two top layers consisting of a fiber-reinforced synthetic material such as polycarbonate or polyetherimide.

European patent application 313 171 describes a flame-retardant sheet-like material which is also thermoplastic.

In the application of such sandwich materials, there exists a desire for the possibility of providing the sandwich materials with a finish at the edges thereof, for instance for use in situations where these edges are exposed to view. Further, it may be important to finish the edges if they come into contact with moisture or if they may easily sustain damage.

There is also a need for a system in which one or more accessories can be provided on or in the edges of the material.

From European patent application 269 148 it is known to cause the core to melt at the edges of such sandwich materials by heating under pressure perpendicularly to a top layer, whereby the top layers are bonded to each other. In this way, a kind of flange is obtained at the lateral edge of the sandwich material.

Although this method already provides an increase of the possibilities, there continues to exist a desire for the simple provision of a suitable method of deforming an edge of such a sandwich material, more specifically for a simple and effective edge finish.

The object of the invention is to provide a method of the type described in the preamble, for deforming an edge, or a part thereof, of a sandwich material which is made up of at least one core which is deformable under the influence of heat and at least one top layer. The present invention is based on the surprising insight that, with a suitable mold and a proper choice of the processing steps, it is possible to realize an effective and good deformation in a simple manner. Moreover, especially when using two top layers, an article is obtained whose stiffness, in particular at the edge thereof, is increased as a result of a part of the fibers in the material of the top layers having acquired a different direction.

The invention accordingly comprises a method for deforming at least a part of an edge of a sandwich material which is made up of at least one core which is deformable under the influence of heat and one or two top layers which are deformable under the influence of heat and/or pressure, wherein an edge of the sandwich material is introduced into a mold at a temperature at which the materials of the core and the top layers are thermoplastically deformable or thermoformable, and the sandwich material is deformed by moving the sandwich material relative to the mold, the form of the edge being consolidated by cooling during or after the deformation.

In this connection, 'deformation of the edge' or 'edge finish' is understood to mean a deformation of the sandwich material at at least a part of at least one edge. This involves a deformation of the edge with the result that the top layer(s) deform(s) entirely or partly, yielding a fully or partly closed finish of a shape determined by the method used. The term 'thermoplastic' is intended to include not only materials that can undergo thermoplastic deformation in the strict definition of the term, but also materials that become deformable under the influence of heat, without actually falling within the strict definition of thermoplastics (thermoformable).

The method according to the invention can be carried out in a number of ways. In the first place, it is possible to carry out the method discontinuously. The starting material is a sheet of a sandwich material, having a core and one or two toplayers, which is deformed at one or more edges by relative displacement of the material and the mold. It is possible to move the mold to the material, the material to the mold, or to move both. The mold and the material move, as it were, parallel to each other, i.e., the top layer(s) and the 'centerline' of the mold remain parallel for at least a part of the time. This is different from the prior art deformation of the edge as disclosed in European patent application 268 148, where the displacement occurs in a direction perpendicular to the top layers.

According to a simple embodiment of the method of the present invention, a wholly or partly rounded mold is started from, which, if so desired, has been heated to a temperature above the softening point of the material of the top layer(s). The edge of the material is introduced into the mold and the edge deforms under the influence of the relative displacement of the mold and the sandwich material towards each other. In the case where the mold has not been heated, the sandwich material should be heated locally at the edge to a temperature above the softening point of the material of the top layer(s). This need not be done if the mold has been heated, although it may be advantageous in certain cases. As a result of the pressure exerted on the top layer(s) during the relative displacement of the mold and the sandwich material, the top layer(s) follow(s) the shape of the mold. In the case of a wholly or partly rounded mold, this results in the top layer(s) bending inwards, while the core deforms entirely or partially or even melts entirely or partially. If two top layers are present they will bend inwards, and they will touch each other, so that the top layers will not be able to move further along the edge but move inwards into the core. At that instant, the heat supply is discontinued in the case of a heated mold, so that the two top layers bind to each other and solidify, forming an effective and attractive edge finish.

Thus, according to this embodiment of the invention, it is possible either to heat and deform in the same mold substantially simultaneously, whereupon the final cooling is carried out preferably outside the mold, or to heat outside the mold and to deform in the mold with more or less simultaneous, complete or partial, cooling.

According to another embodiment of the invention, the deformation can be carried out in at least two steps. The advantage of such an embodiment resides in the possibility of making a more complex shape utilizing two or more molds. Heating, shaping and cooling can be carried out in various ways. It is for instance possible for each mold to be heated to a temperature above the softening point of the top layer(s), with cooling taking place after each step. It is also possible, however, to cool only after the last step or to deform the material in the first mold, which is heated, and to subsequently give the definitive shape to the still soft material and cool in a next, non-heated mold.

In yet another embodiment, which can optionally be combined with one of the above-mentioned embodiments, during the deformation, an accessory or component part, which may or may not be intended to be incorporated into the edge, is present in the mold. This accessory or component part may or may not be incorporated in the deformed sandwich material. An example of such an accessory is a metal tube, which makes it possible to provide a channel in the edge, parallel to the edge. This provides the advantage that it becomes possible by this method to make a hinge of the sandwich material in a simple manner. This may be effected *inter alia* by first providing a flange on the edge, for instance in the manner described hereinabove. With or without preheating, the edge of the sandwich material is introduced into a mold, where the edge rolls up, as it were. This can be realized without further accessories or aids, but it is preferred to use a thin, metal, more specifically copper, tube around which the edge is rolled up, as it were. After cooling, this tube can be removed. By this method, a channel of uniform diameter is obtained in the edge. By a suitable combination of two panels which have been finished in this way, a hinge construction can be manufactured in a simple manner.

In the method according to the invention, the deformation can also take place continuously. This can be effected by continuously heating a sheet of the material at the edge thereof, optionally with simultaneous deformation, or followed by one or more separate deformation steps, as also described hereinabove. A suitable method for continuous deformation is to first pass the material through a profile or a block, in which profile the edge is heated. The edge is subsequently shaped by the use of rolls, which may optionally be heated. This operation may already involve sufficient cooling for the edge to consolidate in the desired shape. It is also possible to subsequently pass the edge through a cooled block so as to consolidate the shape. If so desired, it is also possible to carry out a second deformation in a second or next mold. It is noted that, owing to the continuous character of the method, forms can be manufactured that cannot be released from the mold in lateral direction but can be removed from the mold or die in the longitudinal direction.

The sandwich material used according to the invention is a thermoplastic sandwich material, as described, for instance, in the above-mentioned European patent applications.

Such a sandwich material is made up of a core of a thermoplastic material such as a thermoplastic foam or a thermoplastic honeycomb material and two cover layers, or top layers, made of thermoplastic synthetic material, said top layer(s) preferably being reinforced with fibers.

According to the invention, the thermoplastic synthetic material of the top layers is reinforced with a woven fabric, a knitted fabric, a fibrous web, a random mat, or unidirectionally applied fibers.

In principle, any thermoplastic resin can function as synthetic base material for the foamable material. This thermoplastic resin is preferably selected from the group consisting of polyetherimide, polycarbonate, acrylate polymers, styrene polymers, polyether sulfone, polyether ketone, polyether-ether ketone, polyether ketone-ketone, polyphenylene oxide, polyphenylene sulfide, polyamide, polyolefin and mixtures of two or more of these synthetic materials. The preference is largely determined by the intended use of the article. For use in sectors where the materials may be subject to high mechanical loads or where the materials are to meet strict requirements with regard to the fire-retardant action of the materials, it is preferred to use polyetherimide, polycarbonate, polyether sulfone, polyether ketone, polyether-ether ketone, polyether ketone-ketone, and mixtures of two or more of these synthetic materials.

For the cover layer(s), the same materials can be used as for the foam, but it is also possible to use other materials for that purpose.

If so desired, the sandwich material may be made up of two or more core layers which are separated from each other by fiber-containing intermediate layers. As fibers for these intermediate layers, it is preferred to use glass fibers, carbon fibers, aramid fibers, or other synthetic or natural fibers, such as jute or ramie, which have been impregnated with a thermoplastic synthetic material. For these fiber-containing layers, too, use can be made of a woven fabric, a knitted fabric, a fibrous web, a random mat, or unidirectionally applied fibers.

For the manufacture of the sandwich material that is used according to the invention, a number of methods can be employed. The European patent applications referred to mention a number of methods which are useful. A particularly simple method, which yields good results, is described in the Example of European patent application 345 855. According to this method, a foamable foil as described in this European patent application is provided in unfoamed form between two fiber-reinforced top layers, whereafter the assembly is heated, so that the foil foams and a sandwich material is formed. With this method - an improvement thereof is described in Dutch patent application 9001215 - a very specific foam structure is obtained, the major advantage thereof being that the foam gives unprecedentedly good mechanical properties to the sandwich material.

According to Dutch patent application 9001215, a layer of a thermoplastic resin which contains an excess of blowing agent is formed between two foils, so as to form an assembly comprising at least an intermediate layer of the resin with blowing agent and two top layers, whereafter the blowing agent diffuses partly from the intermediate layer.

In principle, the blowing agents are the same as described in European patent application 345 855. Examples include solvents for the thermoplastic resin, physical blowing agents, liquid chemical blowing agents, water and mixtures of two or more of these blowing agents. Examples of blowing agents to be used include mono-, di-, and trichloromethane, lower hydrocarbons, such as butane, pentane, hexane and the like, understood to include the various isomers thereof, cyclic aromatic and aliphatic hydrocarbons, and the like.

When polyetherimide is used as thermoplastic resin for the intermediate layer, the blowing agent used is preferably dichloromethane or water, because with these combinations optimum results can be obtained.

In the top layer, the synthetic materials may be reinforced with glass fibers, polyamide fibers, such as aramid fibers, polyethylene fibers, polyester fibers and carbon fibers.

According to the simplest embodiment, the core layer consists of the resin and the blowing agent. However, the incorporation of additives is not precluded. Examples of such additives include those selected from the group consisting of stabilizers, antioxidants, fillers such as fibers and/or liquid crystalline polymers, colorants, flame-retardant additives, other inert additives and mixtures of two or more of the components. Further, it is possible to incorporate a softening agent into the system, the purpose of the softening agent being to reduce the temperature at which softening occurs. Suitable softening agents include the fatty acids and metallic soaps of fatty acids. It is also possible to use APP, polybutylene, bitumen, or extender oil such as naphthalenic and paraffinic oil. For this purpose, it is also possible to use waxes, such as microcrystalline wax.

In certain cases, it may be advantageous to incorporate fibers into the intermediate layer. During the softening and foaming thereof, they can orient themselves and fulfill a reinforcing function. It is preferred, however, to start from relatively short and thin fibers, for instance of a thickness of the order of magnitude of a few microns, for instance 0.5-5 µm, and a maximum length of a few millimeters, for instance 0.1-3 mm.

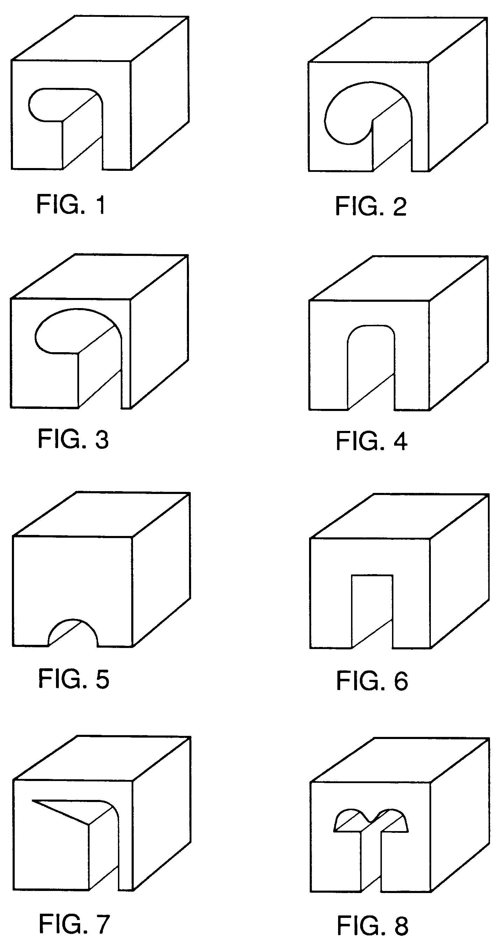

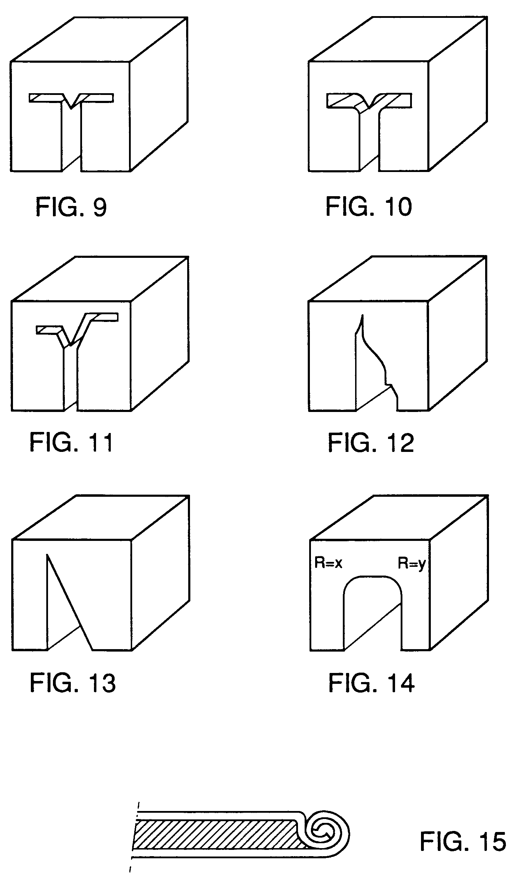

The invention has been elucidated on the basis of the drawings, wherein Figures 1-14 depict some suitable mold forms. Fig. 15 shows a cross-section of a sandwich material with a hinge provided thereon. This construction has been obtained by first heating the edge of a sandwich material under pressure, so that the core melts. The flange thus obtained is subsequently rolled up, as it were, using the method according to the invention. This is preferably effected by introducing a metal (copper) tube into the mold, around which the heated flange is rolled up.

## Claims

1. A method for deforming an edge, or a part of an edge, of a sandwich material which is made up of at least one core which is deformable under the influence of heat and one or two top layer(s) which is/are deformable under the influence of heat and/or pressure, wherein an edge of the sandwich material is introduced into a mold at a temperature at which the materials of the core and the top layer(s) are thermoplastically deformable or thermoformable, and the sandwich material is deformed by moving the sandwich material relative to the mold, the form of the edge being consolidated by cooling during or after the deformation.

2. A method according to claim 1, wherein a sandwich material is used which is made up of at least one thermoplastic foam as core and two thermoplastic top layers.

3. A method according to claim 1 or 2, wherein a mold is used which is heated to a temperature above the softening point of the material of the toplayer(s).

4. A method according to claim 1 or 2, wherein the edge to be finished is first rendered deformable by heating and subsequently deformed in a cold mold.

5. A method according to claims 1-4, wherein the edge to be finished is heated and provisionally shaped in a first, heated mold and, subsequently, the edge to be finished is given its final shape in a second mold.

6. A method according to claims 1-5, wherein the finished edge is allowed to harden outside the mold.

7. A method according to claims 1-6, wherein, for obtaining the final shape, a mold is used having a rounded portion whose shape corresponds to an arc of a circle of a radius substantially equal to half the thickness of the sandwich material.

8. A method according to claims 1-7, wherein a mold is used which comprises a flat bottom and sides, whilst the corners are rounded.

9. A method according to claims 1-8, wherein a mold is used of a shape corresponding to any one of Figures 1-14.

10. A method according to claims 1-9, wherein during the deformation an accessory which may or may not be intended to be incorporated into the edge is present in the mold.

11. A method according to claims 1-10, wherein the edge of the sandwich material is first compressed while being heated, so as to form a flange, and subsequently this flange is introduced into an at least partially rounded mold at a temperature at which it is thermoplastically deformable, so that the flange is rolled up, and, finally, the sandwich material is allowed to solidify.

12. A sandwich material comprising at least one edge finish obtained by the use of the method according to any one of claims 1-11.
